# EUROPEAN PATENT APPLICATION

(11) **EP 1 347 281 A2**
(43) Date of publication of application: **24.09.2003**
(21) Application number: 03005433.2
(22) Date of filing: 13.03.2003
(51) Int. Cl.: G01M 11/00

(54) **Method of measuring characteristics of optical fibers and method of rewinding optical fibers**

(30) Priority: 14.03.2002 JP 2002070380
(71) Applicant: SUMITOMO ELECTRIC INDUSTRIES, LTD., Osaka-shi, Osaka 541 (JP)
(72) Inventor: Nagayama, Katsuya, Yokohama Works, Sakae-ku, Yokohama-shi, Kanagawa (JP); Kasuu, Osamu, Yokohama Works, Sakae-ku, Yokohama-shi, Kanagawa (JP); Saitoh, Tatsuo, Yokohama Works, Sakae-ku, Yokohama-shi, Kanagawa (JP)
(74) Representative: Grünecker, Kinkeldey, Stockmair & Schwanhäusser Anwaltssozietät

(57) **Abstract**

An optical fiber (1) is immersed in a liquid (3) having a low viscosity of not more than 1 Pa·s at 20°C, so that the liquid (3) can permeate into gaps between turns of the optical fiber (1), and stresses, caused by a result of contact between the turns of the optical fiber (1), are eliminated, and in this state transmission characteristics of the optical fiber are measured.

## Description

### Background of the Invention

### Field of the Invention

This invention relates a method of measuring characteristics of an optical fiber and a method of rewinding an optical fiber.

### Description of the Related Art

An optical fiber, such as a coated optical fiber or a coated optical fiber with a color layer, is wound on a bobbin, and usually in this condition, its characteristics are measured. Then the measured optical fibers are forwarded to cable makers and others. Transmission characteristics of the optical fiber to be measured include a transmission loss, polarization mode dispersion (PMD) and dispersion and the like.

However, when the optical fiber undergoes a lateral pressure, a bend loss, such as a microbending and a macrobending, develops in the optical fiber because of stresses. Further, uneven stresses invite birefringence, and this may be the cause of polarization dispersion.

In recent years, there has been an increasing demand for core-expanded fibers because of their nonlinearity. However, such fibers are particularly liable to be affected by a lateral pressure.

In these points, there has been encountered a problem that when characteristics of an optical fiber which is wound on a bobbin (hereinafter referred to as "in a bobbin-wound state"), are measured, its transmission loss and PMD have been higher than the actual optical fiber characteristics.

When the optical fiber is taken out from the bobbin, a bundle of the optical fiber is obtained. In the bundle state, the optical fiber is free from the lateral pressure which is due to a winding tension, but there remain an effect of stresses which is due to contact between turns of the optical fiber.

Further, the air is confined in spaces between the turns of the optical fiber kept in the bobbin-wound state or in the bundle state. The air may be expanded or contracted by a temperature change, and therefore the optical fiber may be pressurized by the air.

Therefore, there has been encountered a problem that it has been difficult to exactly measure the transmission loss and PMD of the optical fiber, kept in the bobbin-wound state or in the bundle state.

### Summary of the Invention

This invention has been made under the above circumstances. An object of the present invention is to easily keep an optical fiber in a tension-free condition so as to accurately measure its transmission characteristics such as a transmission loss, polarization mode dispersion and dispersion.

In order to accomplish the object above, the following means maybe adopted. According to the present invention, there is provided a method of measuring characteristics of an optical fiber comprising: immersing the optical fiber in a liquid, having a low viscosity of not more than 1 Pa·s at 20°C; and measuring the transmission characteristics of the optical fiber in the liquid.

By immersing the optical fiber kept in the bobbin-wound state or in the bundle state in the liquid having a low viscosity of not more than 1 Pa·s at 20°C, the liquid can sufficiently permeate to a peripheral surface of each turn of the optical fiber. Therefore, stresses, caused by contact between the turns of the optical fiber, are eliminated. Further, a macrobending such as irregular winding is eliminated. Therefore, the increase of the transmission loss due to a microbending or a macrobending can be reduced. In addition, the stresses become uniform, and the birefringence can be decreased, so that PMD can be reduced. Thus, measuring transmission loss of an optical fiber without an effect of a lateral pressure can be realized.

The viscosity of the liquid may be not more than 100 mPa·s at 20°C. In this case, the liquid permeates into the optical fiber coil even when the optical fiber coil kept in the bobbin-wound state or in the bundle state is not loosened in the liquid.

By choosing the low-viscosity liquid, the liquid can permeate into very small gaps between the turns of the optical fiber. Therefore the liquid can be fully permeate into the gaps between the turns of the optical fiber in the bobbin-wound state.

The liquid may have a surface tension of not smaller than 30 mN/m at 20°C.

With this construction, the permeation of the liquid into a coating layer of the coated optical fiber can be prevented. Therefore, this reduces a problem that the liquid permeates into an interface between a glass fiber and the coating layer and the coating layer delaminates from the glass fiber. This also reduces a problem that a resin, forming the coating layer, is swollen by the liquid.

The liquid may have a vapor pressure of not more than 20 hPa at 20°C.

By the use of the liquid having the vapor pressure of not more than 20 hPa at 20°C, after picking up the optical fiber from the liquid, the liquid adhered to the optical fiber can be dried without any treatment, whereby the measured optical fiber can soon be used.

The method may comprise loosening the optical fiber in a bundle state before the measurement.

The loosening step can be carried out, for example, by a hand-rubbing or by imparting vibrations to the bundle of the optical fiber. By doing so, the turns of the optical fiber are brought out of intimate contact with one another, so that the liquid can easily permeate into the gaps between the turns of the optical fiber.

The liquid may be water.

In the case of the bobbin-wound state, the viscosity of the liquid is preferably not more than 100 mPa·s at 20°C for the reasons mentioned above. When the characteristics of an optical fiber in the bobbin-wound state have been measured, the optical fiber can immediately be rewound from the bobbin to another bobbin.

The optical fiber may be in a bundle state. In the bundle state, the liquid permeates more easily into the optical fiber.

The optical fiber may be any one of a coated optical fiber, an optical fiber ribbon and a coated optical fiber with a color layer.

A method of rewinding an optical fiber according to the present invention further comprises: drying the liquid while rewinding the optical fiber on another bobbin, after the transmission characteristics of the optical fiber are measured by the above mentioned method of measuring characteristics of the optical fiber. With this method, the optical fiber can be reused after drying the liquid.

### Brief Description of the Drawings

Figs. 1A and 1B are views showing a first embodiment of an optical fiber characteristics measuring method of the present invention;
Fig. 2 is a view showing the first embodiment of the optical fiber characteristics measuring method of the present invention;
Figs. 3A and 3B are views showing a second embodiment of an optical fiber characteristics measuring method of the present invention; and
Fig. 4 is a view showing a rewinding method in the optical fiber characteristics-measuring method of the present invention.

### Detailed Description of the Invention

### (First Embodiment)

A preferred embodiment of the present invention will now be described in detail.

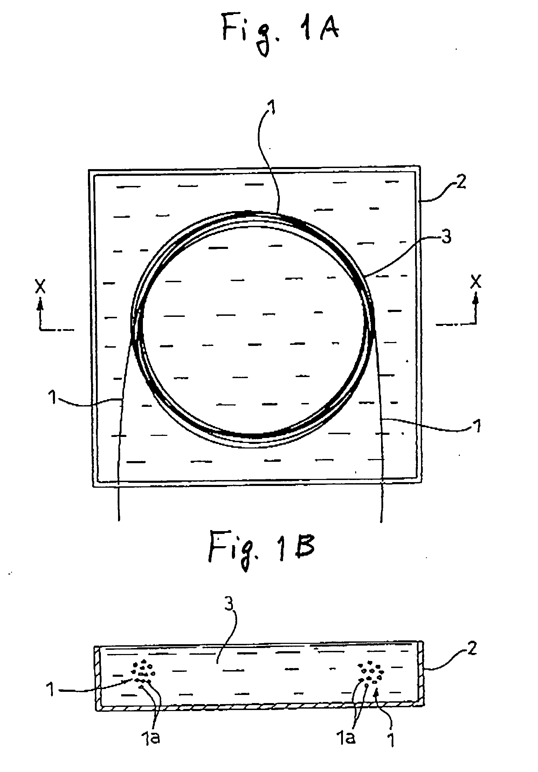

Figs . 1A and 1B show a measurement apparatus for effecting a characteristics measuring method of the present invention. Fig. 1A is a plan view showing an internal construction, and Fig. 1B is a cross-sectional view taken along the line X-X of Fig. 1A.

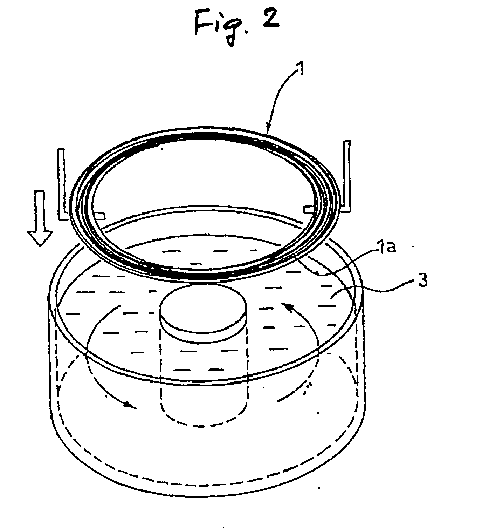

In the characteristics measuring method of the first embodiment, as shown in Figs. 1A and 1B, an optical fiber coil 1, including a coated optical fiber 1a wound in a bundle state, is located in a measurement vessel 2 in which a liquid 3 such as water is stored. Opposite end portions of the optical fiber coil 1, immersed in the liquid, are extended outwardly from the measurement vessel 2 so that transmission characteristics of the optical fiber can be measured. Fig. 2 is a perspective view showing the manner of immersing the optical fiber coil into the liquid in the measurement vessel 2.

The above measuring method comprises immersing the optical fiber coil 1 into the liquid 3 in the measurement vessel 2, and impregnating the optical fiber coil 1 with the liquid 3 in such a manner that the liquid 3 sufficiently permeates to a peripheral surface of each turn of the optical fiber coil.

Before the measurement, the optical fiber coil 1, kept in the bundle state and immersed in the liquid, may be loosened if necessary. This loosening step can be effected by loosening the optical fiber coil by hand-rubbing or by applying vibrations to the optical fiber coil. For example, the coated optical fiber 1a is wound on a bobbin having a barrel diameter of about 280 mm, thereafter the barrel of the bobbin is withdrawn, and the coated optical fiber 1a, wound in a bundle state, is taken out as the optical fiber coil 1. Then this optical fiber coil 1 can be loosened by hand-rubbing such as twisting. Instead of loosening the optical fiber coil 1 by the hand-rubbing so as to separate the turns of the coated optical fiber 1a from each other, vibrations may be applied to the optical fiber coil. The hand-rubbing and vibrations can be both applied to the optical fiber coil.

The step of loosening the optical fiber coil 1 can be effected before or after the optical fiber coil 1 is put into the measurement vessel 2.

The step of loosening the optical fiber coil 1 can be effected during the step of impregnating the liquid 3 into the optical fiber coil 1. For example, the optical fiber coil 1 is put into the measurement vessel 2, and the liquid 3 is poured in the measurement vessel 2, and thereafter the optical fiber coil 1 is rubbed by the hands. By doing so, the optical fiber coil 1 is loosened, so that the liquid is impregnated into the optical fiber coil 1.

The step of loosening the optical fiber coil 1 may be effected by a method in which the optical fiber coil 1 is received in the measurement vessel 2, and then this measurement vessel 2 is vibrated.

After the loosened optical fiber coil 1 is put in the measurement vessel 2, the liquid 3 is filled to the peripheral surface of the coated optical fiber 1a within the measurement vessel 2. At this time, the gaps between the turns of the optical fiber element 1a can be filled with the liquid 3 by imparting vibrations (such as ultrasonic vibration or mechanical vibration) to the measurement vessel 2 which puts the optical fiber coil 1 therein, and holds the liquid 3, and besides the amount of residual bubbles decreases. As a result, the characteristics of the optical fiber can be measured more accurately.

When the optical fiber in the bundle state is immersed in the liquid, the optical fiber is kept in a stress- reduced condition. However, even when the optical fiber, kept wound on the bobbin, is immersed in the liquid, the liquid of a low viscosity permeates into the gaps, and the fiber slightly moves, or the liquid serves as a cushion, so that the stresses between the turns of the fiber can be reduced. In the case of the bobbin-wound optical fiber, although tensile stresses due to the tension remain, such stresses will not directly and greatly affect the characteristics. When the optical fiber, wound on the bobbin, is immersed in the liquid, and its characteristics are measured in this state, the performance of the optical fiber, wound on the bobbin, can be guaranteed by these characteristics over the entire length of the optical fiber. When part of the optical fiber is taken out from the bobbin in a bundle state and characteristics of the part of the optical fiber in the bundle state are measured, only this portion is guaranteed.

In themeasuringmethod of the first embodiment, the coated optical fiber 1a in the form of a coil is put into the measurement vessel 2, and the liquid 3 is filled to the peripheral surface of the optical fiber coil 1 within the measurement vessel 2. A liquid, having a low viscosity of not more than 1 Pa·s at 20°C, is used as the liquid 3. Preferably, for example, water, vegetable oil (e.g. olive oil), ethanol, acetone, kerosene or silicone oil (having a low viscosity of not more than 1 Pa·s at 20°C) is used.

More preferably, the liquid has the viscosity of not more than 100mPa·s at 20°C. In this case, the liquid permeates into the optical fiber coil even when the optical fiber, kept immersed inthe liquid, is not loosened. More specifically, for example, water, vegetable oil (e.g. olive oil), ethanol, acetone or kerosene is used.

When the viscosity of the liquid 3 is in the above mentioned range, the liquid 3 is sufficiently filled around the optical fiber coil 1 and also between the turns of the coated optical fiber 1a, and therefore only a small stresses affect uniformly from the liquid to the coated optical fiber 1a. Therefore, the characteristics (a transmission loss, PMD and dispersion) can be accurately measured.

The optical fiber may be any one of a coated optical fiber, an optical fiber ribbon and an coated optical fiber with a color layer. This measurement method is non-destructive, and enables the optical fiber to be easily restored into the initial state, where the measurement has not been performed, and therefore the optical fiber which has been measured can be reused.

### (Second Embodiment)

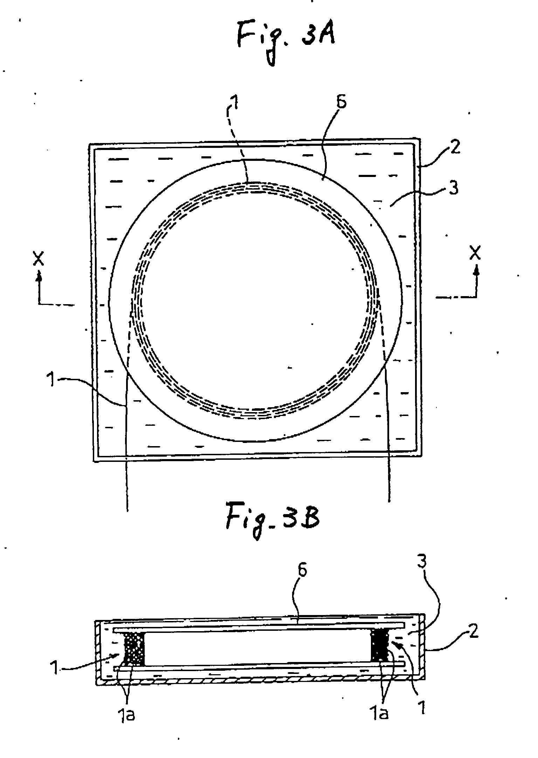

Figs. 3A and 3B show a measurement apparatus for effecting a second embodiment of a characteristics measuring method of the present invention. Fig. 3A is a plan view showing an internal construction, and Fig. 3B is a cross-sectional view taken along the line X-X of Fig. 3A.

In the characteristics measuring method of the second embodiment, as shown in Figs. 3A and 3B, an optical fiber coil 1, including a coated optical fiber 1a wound on a first bobbin 6, is put in a measurement vessel 2 in which a liquid 3 such as water is stored. The opposite end portions of the optical fiber coil 1, immersed in the liquid, are extended outwardly from the measurement vessel 2 so that transmission characteristics of the optical fiber can be measured. The optical fiber coil 1, wound on this bobbin, is held within the measurement vessel 2.

For effecting the above measuring method, the liquid needs to have a lower viscosity than that of the liquid used in the first embodiment. The reason is that the liquid is less liable to permeate into the optical fiber coil kept wound on the bobbin.

### (Example 1)

A 10km coated optical fiber (with a pure silica core), having an effective core area of 110 µm², was wound on a bobbin, and then the barrel of the bobbin was withdrawn, thereby forming an optical fiber in a bundle state.

Then, a transmission loss and PMD of the optical fiber were measured before and after the optical fiber was immersed in alcohol. A similar measurement was effected after the optical fiber was taken out of the alcohol, and was dried. Results thereof are shown in Table 1.

**[Table 1]**

| | Bobbin-wound state | coil state (Bundle state) | Immersion of bundled optical fiber in alcohol | Drying of bundled optical fiber |
|---|---|---|---|---|
| Transmission loss (dB/km) | 0.171 | 0.169 | 0.166 | 0.169 |
| PMD (ps/km^{1/2}) | 0.11 | 0.05 | 0.02 | 0.05 |

As is clear from Table 1, when the optical fiber in a bundle state is immersed in the alcohol, the values of the transmission loss and PMD are smaller than those obtained before the immersion in the alcohol. It is thought that these values are near to values obtained in a tension-free condition as when a cable is installed straight. When the optical fiber in the bundle state is dried, the transmission loss and PMD return to the values obtained when these are measured in the air. It is thought that the reason for this is that the turns of the optical fiber contact one another due to drying, so that stresses act between the turns of the optical fiber.

### (Example 2)

A 10km coated optical fiber (with a pure silica core) as described in Example 1 was wound on a bobbin, thereby forming a bobbin-wound optical fiber.

Then, at a first day, a transmission loss and PMD of this bobbin-wound optical fiber with the pure silica core were measured in the air. Then, at a second day, the optical fiber was immersed in water, and the transmission loss and PMD thereof were measured. As a result, it was found that the characteristics were improved. It is thought that the reason for this is that the water permeated between the turns of the coated optical fiber even in the bobbin-wound state, so that a stress-released state was obtained.

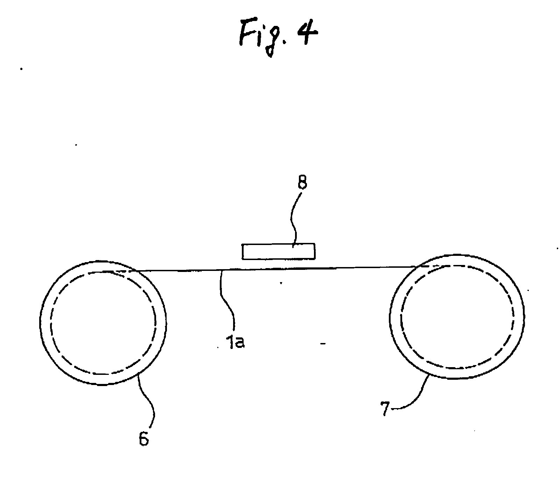

At a third day, the coated optical fiber 1a was unwound from the first bobbin, and was rewound on a second bobbin 7 as shown in Fig. 4, and during this operation, the air is blown to the coated optical fiber 1a by a fan to dry the optical fiber. A transmission loss and PMD of the coated optical fiber 1a, kept wound on the second bobbin 7, were measured. As a result, the characteristics returned to the values in the initial bobbin-wound state. A cut-off wavelength and a dispersion slope were the same as the values in the initial bobbin-wound state.

At a fourth day, the bobbin was removed, and the optical fiber was kept in a bundle state. As a result, the transmission loss and PMD were slightly improved.

At a fifth day, the optical fiber was again immersed in water, and as a result the transmission loss and PMD were more improved than when the bobbin was immersed in water.

The above results are shown in Table 2.

**[Table 2]**

| | Bobbin-wound state | Immersion of bobbin in water | After drying and rewinding | Bundled optical fiber | Immersion of bundled optical fiber in water |
|---|---|---|---|---|---|
| Transmission loss (dB/km) | 0.171 | 0.168 | 0.171 | 0.169 | 0.166 |
| PMD (ps/ km^{1/2}) | 0.11 | 0.04 | 0.12 | 0.05 | 0.03 |

As is clear from Table 2, the values of the transmission loss and PMD, obtained when the bobbin-wound optical fiber was immersed in water, are generally the same as those obtained when the bundle of the optical fiber was immersed in water. It is thought that these values are near to values obtained in a tension-free condition as when a cable is installed straight.

### (Comparative Example)

A 10km coated optical fiber (with a pure silica core) as described in Examples 1 and 2 was wound on a bobbin, thereby forming a bobbin-wound optical fiber.

Thus, the bobbin-wound optical fiber with the pure silica core was prepared, and a transmission loss and PMD thereof were measured. Then, the bobbin was removed, and the optical fiber was kept in a bundle state, and a transmission loss and PMD thereof were measured. Then, this bundle of the optical fiber was immersed in silicone oil having a high viscosity (2Pa·s), and the transmission loss and PMD thereof were measured.

Results thereof are shown in Table 3.

**(Table 3]**

| | Bobbin-wound state | Bundled optical fiber | Immersion of bundled optical fiber in high-viscosity silicone oil |
|---|---|---|---|
| Transmission loss (dB/km) | 0.171 | 0.169 | 0.169 |
| PMD (ps/ km^{1/2}) | 0.11 | 0.05 | 0.05 |

As is clear from Table 3, even when the bundle of the optical fiber was immersed in silicone oil having the high viscosity (2Pa·s) at 20°C, values of the transmission loss and PMD were not improved.

Further, the optical fiber was smeared with the oil, and could not be reused, and also a cumbersome processing thereof was necessary for disposal.

Although an attempt was made to loosen the optical fiber in fine powder such as talc, the powder dusts flied terribly, and entered the eyes and trachea of the operator, and therefore this attempt had to be discontinued.

Although the illustrated measurement vessel 2 has a rectangular shape in the Fig. 1 and Fig. 3, the vessel of the invention is not limited to such a shape, and may have any other suitable shape such for example as a round shape.

In the optical fiber characteristics measuring methods of the above-mentioned embodiments, although the optical fibers with the pure silica core have been described, the optical fibers are not limited to such a type, and the invention can be applied to other optical fibers. For example, the invention can be applied to an optical fiber coil using a single-mode optical fiber, a wavelength dispersion shifted optical fiber, a NZ-type wavelength dispersion shifted optical fiber, a dispersion compensating optical fiber, an erbium-doped optical fiber, a polarization-maintaining optical fiber or others.

Other liquids than water and alcohol, such as acetone, can be used. Various kinds of silicone oil, having different viscosities, are commercially available. In the present invention, a silicone oil, having a viscosity of not more than 1 Pa·s at 20°C, is used.

As described above, when the optical fiber is actually used for transmitting signal light, it is used in straight in a cable. Therefore the optical fiber will not be subjected to stresses resulting from the wound state.

In the present invention, the stresses, affecting to the optical fiber as a result of forming the optical fiber in a bobbin-wound state orabundle state, are eliminated. Therefore the measurement results, very close to the transmission characteristics of the optical fiber in a cable condition, can be obtained. Accordingly, the transmission characteristics in the cable state can be assured. Further, the method of the present invention is non-destructive, and therefore by drying or removing the liquid after the characteristics of the optical fiber is measured in the liquid, the optical fiber can be easily restored into a usable state, and a disposal cost will not be needed.

## Claims

1. Amethod of measuring characteristics of an optical fiber, said method comprising:
immersing the optical fiber in a liquid, having a low viscosity of not more than 1 Pa·s at 20°C; and
measuring the transmission characteristics of the optical fiber in the liquid.

2. The method of measuring characteristics of an optical fiber according to claim 1, wherein said liquid has the viscosity of not more than 100 mPa·s at 20°C.

3. The method of measuring characteristics of an optical fiber according to claim 1 or claim 2, wherein said liquid has a surface tension of not smaller than 30 mN/m at 20°C.

4. The method of measuring characteristics of an optical fiber according to any one of claims 1 to 3, wherein said liquid has a vapor pressure of not more than 20 hPa at 20°C.

5. The method of measuring characteristics of an optical fiber according to any one of claims 1 to 4, further comprising:
loosening the optical fiber in a bundled condition before the measurement.

6. The method of measuring characteristics of an optical fiber according to claim 1, wherein said liquid is water.

7. The method of measuring characteristics of an optical fiber according to any one of claims 1, 2, 3, 4 and 6, wherein said optical fiber is wound on a bobbin.

8. The method of measuring characteristics of an optical fiber according to any one of claims 1 to 6, wherein said optical fiber is in a bundle state.

9. The method of measuring characteristics of an optical fiber according to any one of claims 1 to 8, wherein said optical fiber is a coated optical fiber.

10. The method of measuring characteristics of an optical fiber according to any one of claims 1 to 8, wherein said optical fiber is an optical fiber ribbon.

11. The method of measuring characteristics of an optical fiber according to any one of claims 1 to 8, wherein said optical fiber is a coated optical fiber with a color layer.

12. A method of rewinding an optical fiber comprising:
drying a liquid, adhered on the optical fiber, while rewinding the optical fiber on another bobbin, after the transmission characteristics of the optical fiber are measured by said method of measuring characteristics of the optical fiber as defined in any one of claims 1 to 11.
